# EUROPEAN PATENT APPLICATION

(11) **EP 2 730 831 A1**
(43) Date of publication of application: **14.05.2014**
(21) Application number: 13151755.9
(22) Date of filing: 17.01.2013
(51) Int. Cl.: F16L 59/14, F16L 9/14, F17D 1/08

(54) **Pipeline apparatus**

(30) Priority: 08.11.2012 US 201261723905 P; 15.11.2012 US 201213677476
(71) Applicant: Linde Aktiengesellschaft, 80331 München (DE)
(72) Inventor: Malas, Akin, 85757 Karlsfeld b München (DE); Walz, Andreas, 82515 Wolfratshausen (DE)
(74) Representative: Hofmann, Andreas

(57) **Abstract**

In order to overcome the problems that earlier apparatus have experienced, a pipeline apparatus (10) for liquid cryogen is proposed, comprising:
- a first assembly or first insert (18) including
-- a first pipe (12) having a first exterior surface and a first passageway for the liquid cryogen, and
-- a longitudinal member (14, 15) extending along a portion of the first exterior surface of the first pipe (12);

- a second pipe (20) having a second passageway sized and shaped to receive the first assembly or first insert (18) therein, the second pipe (20) coacting with the longitudinal member (14, 15) to provide a pair of channels (16, 17) in the second passageway; and
- a third pipe (21) having a third passageway sized and shaped to receive the second pipe (20) therein, the third pipe (21) spaced apart from the second pipe (20).

## Description

### Technical field of the present invention

The present invention relates to the technical field of pipeline design and construction, in particular to a pipeline apparatus for liquid cryogen.

### Background of the present invention; prior art

Insulated pipelines are known which may be externally insulated with lagging or vacuum jacketed. When a cryogenic substance is pressurized its temperature increases and, with cryogenics, an increase in temperature is not desirable. For example, liquid nitrogen (LIN) boils at atmospheric pressure (zero barg) at a temperature of 77.347 K (-195.80°C).

However, when the pressure of the liquid nitrogen is increased to thirty barg in a pipeline, the boiling temperature of the liquid increases to 126.30 K (-146.85°C), an increase of approximately fifty degrees in temperature. This boiling temperature increase of the cryogen causes the cryogen to lose a large portion of its cooling efficiency and increases the risk of evaporation during transportation in the pipeline.

Therefore, subcooling the liquid is used to solve the problem but unfortunately, existing pipeline design and construction still permits the liquid cryogen to vaporize after or downstream of the subcooler.

### Disclosure of the present invention: object, solution, advantages

Starting from the disadvantages and shortcomings as described above and taking the prior art as discussed into account, an object of the present invention is to overcome the problems that earlier pipeline apparatus have experienced.

This object is accomplished by a pipeline apparatus comprising the features of claim 1. Advantageous embodiments and expedient improvements of the present invention are disclosed in the dependent claims.

Basically, the present invention relates to a pipeline apparatus for liquid cryogen, this cryogen for example being nitrogen (N₂), hydrogen (H), and/or helium (He); more particularly, the present invention relates to an, especially insulated, pipeline, for example for high pressure cryogenic applications.

According to the present invention, the pipeline apparatus includes a first assembly or first insert, this first assembly or first insert comprising
- a first or central pipe through the passageway of which the liquid cryogen can flow, this first or central pipe in particular being constructed from a material selected from the group consisting of stainless steel, of copper, of copper alloy or of another metallic alloy, and
- a longitudinal member extending along a portion of a first exterior surface of the first or central pipe, this longitudinal member
   -- in particular providing an insulation effect and/or
   -- in particular being formed from copper or from copper alloy material and/or
   -- in particular extending along the portion of the first exterior surface to a length less than a first length of the first passageway.

According to an advantageous embodiment of the present invention, the longitudinal member may comprise a fin-shaped or wing-shaped member extending from the portion of the first exterior surface.

Expediently, this fin-shaped or wing-shaped member may comprise at least two fin-shaped or wing-shaped sections being mounted, for example welded or brazed, to the first or central pipe and extending from different regions of the first exterior surface of the first or central pipe.

Favourably, these different regions may be disposed at the first exterior surface at opposed sides of the first or central pipe.

According to the present invention, the pipeline apparatus further includes a second pipe or tube (member) having a second passageway sized and shaped to receive the first assembly or first insert therein, this second pipe or tube (member) in particular being vacuum jacketed or vacuum insulated and/or in particular being formed from stainless steel, from copper, from copper alloy or from other metallic material.

The second pipe or tube (member) coacts with the longitudinal member to provide a pair of passageways or channels along the exterior of the first or central pipe and/or in the second passageway; in particular, the longitudinal member comprises a distal end in contact with an inner surface of the second pipe or tube (member).

According to a preferred embodiment of the present invention, the longitudinal member substantially extends along the first or central pipe, essentially in parallel to a longitudinal axis of said first or central pipe, and therefore the longitudinal member essentially conforms to the shape of the first or central pipe.

The longitudinal member can be formed integral with the first or central pipe. The combination of the first or central pipe and the longitudinal member may provide the first assembly or first insert.

According to the present invention, the pipeline apparatus further includes a third or outer pipe having a third passageway sized and shaped to receive the second pipe or tube (member) therein, the third or outer pipe spaced apart from the second pipe or tube (member).

This space between the second pipe or tube (member) and the third or outer pipe may provide an insulation effect with air or a vacuum therein. Alternatively foam or other insulation material can fill the space between the second pipe or tube (member) and the third or outer pipe to provide insulation for the first assembly or first insert.

According to an advantageous embodiment of the present invention, the third or outer pipe may be formed from a material selected from the group consisting of stainless steel and another metallic alloy and/or may have a shape similar to the first or central pipe and to the second pipe or tube (member). In connection therewith or independently thereof, a substantial portion of each of the first pipe, the second pipe and the third pipe may be coaxial.

With the first assembly or first insert not consuming the entire interior space of the second pipe or tube (member), a first end cap mounted to one end of the third or outer pipe and a second end cap mounted to an opposite end of the third or outer pipe may expediently seal the second passageway and the third passageway but may also provide an entry space and a return space, respectively at opposed ends of the second pipe or tube (member).

According to a favoured embodiment of the present invention, a circulation pump and/or a vacuum pump may be operatively connected to a fourth pipe, in particular to a line or conduit, this fourth pipe in particular being in communication with the second passageway for providing cryogen to said second passageway.

The circulation pump and/or the vacuum pump may be in communication with the entry space through this fourth pipe to circulate the cryogen, in particular the low pressure cryogen, along the longitudinal member.

Preferably, a pressure control may include relief valves and a pressure gauge and may be disposed for communication with the fourth pipe for the circulating pump and/or the vacuum pump respectively.

The pressure control may be used with the fourth pipe where the low pressure cryogen is introduced, or the pressure control may also be mounted for use at the return space. The circulation of the cryogen is to increase convection from the cold liquid flow through the second pipe or tube (member).

The present embodiments
- maintain the liquid cryogen at a temperature as low as possible during transportation or delivery of the cryogen through the pipeline;
- increase cooling efficiency of the liquid cryogen so that same can be used for impingement cooling applications where high pressure LIN above about three barg is used; and
- when used with a vacuum pump, reduce the cryogenic temperature below temperatures of LIN at -1 barg at 63.148 K (-210°C) therefore increasing the LIN efficiency at impingement.

The present invention finally relates to the use of at least one pipeline apparatus as described above for high pressure cryogenic applications.

### Brief description of the drawings

For a more complete understanding of the present inventive embodiment disclosures and as already discussed above, there are several options to embody as well as to improve the teaching of the present invention in an advantageous manner. To this aim, reference may be made to the claims dependent on claim 1; further improvements, features and advantages of the present invention are explained below in more detail with reference to preferred embodiments by way of non-limiting example and to the appended drawing figures taken in conjunction with the description of the embodiments, of which:
- FIG. 1: shows a perspective, transparent view of a cryogenic pipeline embodiment according to the present invention;
- FIG. 2: shows a cross-section of the pipeline embodiment taken along line 2-2 of FIG. 1; and
- FIG. 3: shows a cross-sectional side view of the cryogenic pipeline embodiment of FIG. 1 and FIG. 2.

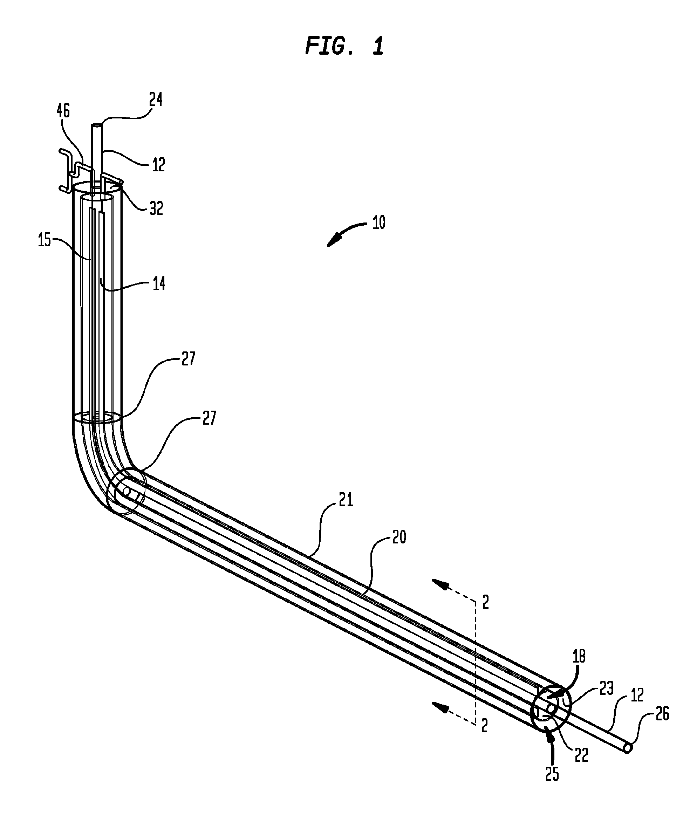

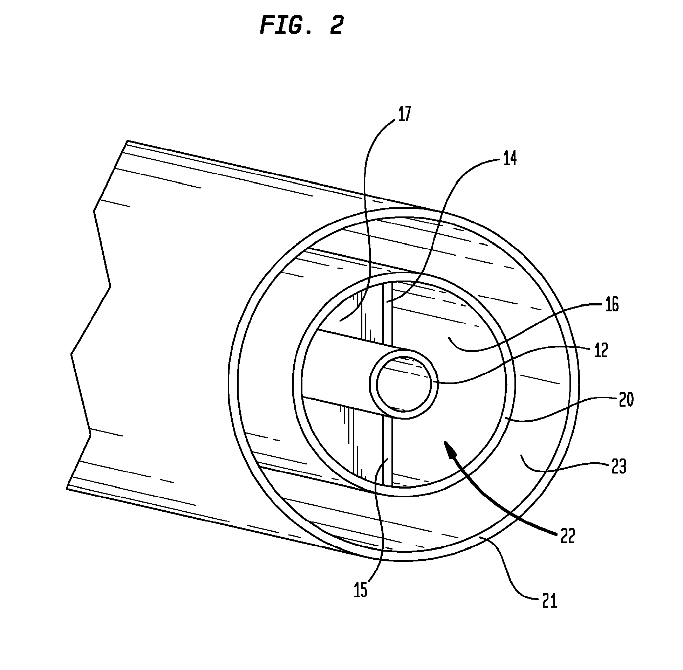

In the appended drawing figures, like equipment is labelled with the same reference numerals throughout the description of FIG. 1 to FIG. 3.

### Detailed description of the drawings; best way of embodying the present invention

Referring to FIG. 1 to FIG. 3, a pipeline apparatus of the present embodiments is shown generally at 10. The apparatus 10 includes a central pipe 12 through which a liquid cryogen such as for example nitrogen (N₂), hydrogen (H), or helium (He) will flow. The pipe 12 can be constructed from copper or from copper alloy material.

By way of example, reference to the cryogen will be liquid nitrogen (LIN), although it is understood that other fluids and other cryogenic liquids can flow through the pipe 12. The central pipe 12 can be of any length and manufactured with turned or bent sections as the application requires.

Copper fins 14, 15 or wings are mounted to the central pipe 12. The fins 14, 15 can be welded or brazed to an exterior surface of the central pipe 12. The fins 14, 15 provide an insulation effect and a pair of passageways 16, 17 or channels along an exterior of the central pipe 12.

As shown, the fins 14, 15 substantially extend along the central pipe 12 parallel to a longitudinal axis of said pipe 12 and therefore the fins 14, 15 essentially conform to the shape of the central pipe 12. The fins 14, 15 can be formed integral with the central pipe 12. The combination of the central pipe 12 and the fins 14, 15 provides a first assembly or first insert 18.

The apparatus 10 includes a tube member 20 having an interior 22 sized and shape to receive the first assembly or first insert 18. The tube member 20 can be vacuum jacketed or vacuum insulated, and may be formed from stainless steel, copper or other metallic material. The fins 14, 15 coact with the tube member 20 to form the passageways 16, 17 or channels.

An outer pipe 21 having a shape similar to the central pipe 12 and tube member 20 has a space 23 therein sized and shaped to receive the tube member 20, as shown for example in FIG. 1. The space 23 provides an insulation effect with air or a vacuum therein. Alternatively foam or other insulation material can fill the space 23 to provide insulation for the first assembly or first insert 18.

The combination of the first assembly or first insert 18 and the tube member 20 forms a second assembly or second insert 25 which is disposed in the space 23 provided by the outer pipe 21. The outer pipe 21 may be formed from stainless steel, copper or other metallic material.

At least one spacer 27 and depending upon the length of the apparatus and the bends therein, a plurality of said spacers 27 may be used to provide structural support and spatial arrangement between and among the central pipe 12, the tube member 20 and the outer pipe 21. The spacer(s) 27 can be welded into position as shown in FIG. 1.

One end 24 of the central pipe 12 is connected to a source (not shown) of high pressure sub-cooled liquid nitrogen at approximately greater than about three barg. Another end 26 of the central pipe 12 extends through the end cap 30.

The first assembly or first insert 18 does not consume the entire interior space 22 of the tube 20. That is, end caps 28, 30 seal opposed ends of the tube 20, but provide an entry space 32 and a return space 34, respectively at opposed ends of the tube member 20.

A pipe 35 introduces a low pressure liquid nitrogen 36 for sub-cooling and circulation at less than approximately one barg to the entry space 32. The liquid nitrogen flows in the passageway 16 along the length of the tube member 20 whereupon it reaches the return space 34 before the end cap 30, at which point the flow turns and proceeds along the passageway 17.

The copper fins 14, 15 coact to provide the separate passageways 16, 17. The flow 43 of the liquid cryogen continues back toward where it was introduced at the entry space 32 to be recirculated again back through the passageway 16. The flow 43 keeps the temperature of the cryogen liquid in the central pipe 12 as low as possible to prevent vaporization of the liquid.

A circulation pump 40 and/or a vacuum pump 42 are in communication with the entry space 32 through a line 46 or conduit to circulate the low pressure LIN 36 along the fins 14, 15. A pressure control unit 44 includes relief valves and a pressure gauge and is disposed for communication with the line 46 for the circulation pump 40 and/or the vacuum pump 42 respectively.

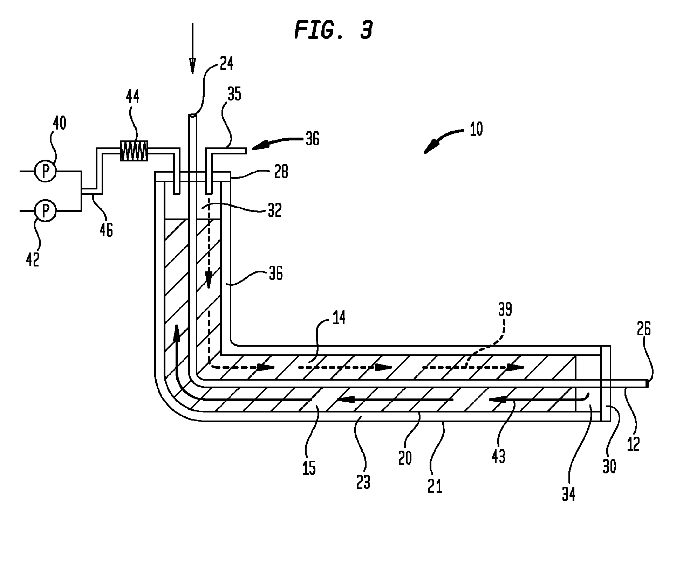

Although the pressure control unit 44 in FIG. 3 is shown used with the line 46 where the low pressure liquid nitrogen 36 is introduced, the pressure control can also be mounted for use at the return space 34.

The circulation of the LIN 36 is to increase convection from the cold liquid flow through the tube member 20. It is necessary to only use either the circulation pump 40 or the vacuum pump 42, depending upon temperature regeneration and the cooling medium (cryogen) being used.

The setting at the pressure control unit 44 will therefore control and maintain the pressure in the entry space 32. During operation, there will be evaporation of the LIN 36, and any evaporated gas or vapor will have to be released from the apparatus 10 through relief valves at the pressure control unit 44.

For the circulation pump 40, a set point at the pressure control unit 44 will determine when relief valves are to be opened to exhaust evaporated gas.

For the vacuum pump 42, a set point for the pressure control unit 44 will determine when the pump 42 is to continue to work to release extra pressure created by the evaporation so the set point does not change.

The sub-cooling LIN 36 is circulated over the fins 14, 15 in most applications from the uppermost to the lowermost parts of the central pipe 12, and any gas occurring therefrom will be vented through a pressure relief valve operationally associated with the pressure control 44.

As an option, the sub-cooling LIN 36 can be applied under a vacuum to reduce its temperature. The boiling point of a cryogen changes with changing pressure, i. e. increasing pressure will therefore increase the boiling temperature of the cryogen.

Therefore, reducing the pressure below atmosphere pressure will lead to decreasing the boiling point of the cryogen for subcooling the liquid. Lower temperatures to create a larger difference between the boiling temperature of the cryogen and the actual temperature when the cryogen is transported will be required.

Should the pressure of the sub-cooling LIN 36 exceed a predetermined pressure, said pressure will be released by the pressure control unit 44 and vented external to the apparatus 10.

The present embodiments provide for recycled low pressure liquid (the sub-cooling liquid) to therefore increase the convection of the liquid to correspondingly increase the efficiency of the subcooling. By controlling the pressure of the present embodiments one is able to strictly control the sub-cooling temperatures in the sub-cooling chamber.

The sub-cooling liquid can be subjected to a vacuum to provide lower sub-cooling temperatures which would therefore enable more efficient sub-cooled transportation of the cryogens through the pipe.

By increasing a surface area of sub-cooler with the fins it is therefore possible to increase the efficiency of the sub-cooling liquid. Finally, the embodiments provide for concurrent sub-cooling and transport of the cryogen.

It will be understood that the embodiments described herein are merely exemplary, and that one skilled in the art may make variations and modifications without departing from the spirit and scope of the present invention. All such variations and modifications are intended to be included within the scope of the present invention as described and claimed herein. Further, all embodiments disclosed are not necessarily in the alternative, as various embodiments of the present invention may be combined to provide the desired result.

### List of reference numerals

- 10: pipeline apparatus
- 12: first pipe, in particular central pipe
- 14: longitudinal member, in particular fin or wing, for example copper fin or copper wing
- 15: longitudinal member, in particular fin or wing, for example copper fin or copper wing
- 16: first channel or first passageway
- 17: second channel or second passageway
- 18: first assembly or first insert
- 20: second pipe, in particular tube or tube member
- 21: third pipe, in particular outer pipe
- 22: interior or interior space of tube member 20
- 23: space in third pipe 21
- 24: first end of first pipe 12
- 25: second assembly or second insert
- 26: second end of first pipe 12
- 27: spacer
- 28: first end cap
- 30: second end cap
- 32: entry space
- 34: return space
- 35: pipe
- 36: liquid nitrogen (LIN), in particular low pressure liquid nitrogen or sub-cooling liquid nitrogen
- 40: circulation pump
- 42: vacuum pump
- 43: flow
- 44: pressure control or pressure control unit
- 46: fourth pipe, in particular conduit or line

## Claims

1. A pipeline apparatus (10) for liquid cryogen, comprising:
- a first assembly or first insert (18) including
-- a first pipe (12) having a first exterior surface and a first passageway for the liquid cryogen, and
-- a longitudinal member (14, 15) extending along a portion of the first exterior surface of the first pipe (12);
- a second pipe (20) having a second passageway sized and shaped to receive the first assembly or first insert (18) therein, the second pipe (20) coacting with the longitudinal member (14, 15) to provide a pair of channels (16, 17) in the second passageway; and
- a third pipe (21) having a third passageway sized and shaped to receive the second pipe (20) therein, the third pipe (21) spaced apart from the second pipe (20).

2. The pipeline apparatus according to claim 1, wherein the first passageway has a first length and the longitudinal member extends along the portion of the first exterior surface to a length less than the first length.

3. The pipeline apparatus according to claim 1 or 2, wherein the longitudinal member (14, 15) comprises a distal end in contact with an inner surface of the second pipe (20).

4. The pipeline apparatus according to at least one of claims 1 to 3, wherein the longitudinal member (14, 15) is formed from copper or from copper alloy material.

5. The pipeline apparatus according to at least one of claims 1 to 4, wherein the longitudinal member (14, 15) comprises a fin-shaped or wing-shaped member extending from the portion of the first exterior surface.

6. The pipeline apparatus according to claim 5, wherein the fin-shaped or wing-shaped member comprises at least two fin-shaped or wing-shaped sections extending from different regions of the first exterior surface.

7. The pipeline apparatus according to claim 6, wherein the different regions are disposed at the first exterior surface at opposed sides of the first pipe (12).

8. The pipeline apparatus according to at least one of claims 1 to 7, further comprising insulation disposed in a space (23) between the second pipe (20) and the third pipe (21).

9. The pipeline apparatus according to at least one of claims 1 to 8, further comprising a first end cap (28) mounted to one end of the third pipe (21) and a second end cap (30) mounted to an opposite end of the third pipe (21) for sealing the second passageway and the third passageway.

10. The pipeline apparatus according to at least one of claims 1 to 9, wherein the first pipe (12), the second pipe (20) and the third pipe (21) are formed from a material selected from the group consisting of stainless steel and another metallic alloy.

11. The pipe line apparatus according to at least one of claims 1 to 10, wherein a substantial portion of each of the first pipe (12), second pipe (20) and third pipe (21) are coaxial.

12. The pipeline apparatus according to at least one of claims 1 to 11, further comprising a fourth pipe (46) in communication with the second passageway for providing liquid nitrogen (LIN) to said second passageway.

13. The pipeline apparatus according to claim 12, further comprising a pressure control (44) in communication with the liquid nitrogen (LIN) in the fourth pipe (46).

14. The pipeline apparatus according to claim 12 or 13, further comprising
- a circulation pump (40) operatively connected to the fourth pipe (46), and/or
- a vacuum pump (42) operatively connected to the fourth pipe (46).

15. Use of at least one pipeline apparatus (10) according to at least one of claims 1 to 14 for high pressure cryogenic applications.
